## Europäisches Patentamt
## European Patent Office
## Office européen des brevets

(19)

(11) Veröffentlichungsnummer : **0 135 751**
**B1**

(12) **EUROPÄISCHE PATENTSCHRIFT**

(45) Veröffentlichungstag der Patentschrift :
03.12.86

(21) Anmeldenummer : 84109375.0

(22) Anmeldetag : 07.08.84

(51) Int. Cl.⁴ : **F 15 D 1/08, F 16 K 47/02**

(54) **Hydraulikvorrichtung.**

(30) Priorität : 20.09.83 DE 3333967

(43) Veröffentlichungstag der Anmeldung :
03.04.85 Patentblatt 85/14

(45) Bekanntmachung des Hinweises auf die Patenterteilung : 03.12.86 Patentblatt 86/49

(84) Benannte Vertragsstaaten :
AT BE CH DE FR GB IT LI LU NL SE

(56) Entgegenhaltungen :
DD-A-    42 246
DE-A- 2 542 666
DE-A- 3 147 000
DE-C-    125 837

(73) Patentinhaber : **Heilmeier & Weinlein Fabrik für Oel-
Hydraulik GmbH & Co. KG
Neumarkter Strasse 26
D-8000 München 80 (DE)**

(72) Erfinder : **Brunner, Rudolf
Wankstrasse 23
D-8011 Baldham (DE)**

(74) Vertreter : **Patentanwälte Dipl.-Ing. A. Grünecker, Dr.-
Ing. H. Kinkeldey, Dr.-Ing. W. Stockmair,
Dr. rer. nat. K. Schumann, Dipl.-Ing. P.H. Jakob, Dr.
rer. nat. G. Bezold Maximilianstrasse 58
D-8000 München 22 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft eine Hydraulikvorrichtung der im Oberbegriff des Patentanspruches 1 angegebenen Art.

In derartigen Hydraulikvorrichtungen tritt dann eine störende Geräuschentwicklung auf, wenn das Druckmittel bei hohem Arbeitsdruck und ggf. in großer Fördermenge unter Entspannen rasch in den Ablauf abströmt. Die Geräuschentwicklung beruht vermutlich auf einem Kavitationseffekt in dem entstehenden Strahl und auf der Fortpflanzung des dynamischen Strahles über den ganzen Strömungsweg. Die Geräuschentwicklung macht sich um so stärker bemerkbar, je stärker der Strahl oder je geringer der Gegendruck im hinter den Entspannungsbereich liegenden Abschnitt des Strömungsweges ist. Die Arbeits-, Steuer- oder Regelglieder, die in der Hydraulikvorrichtung vorgesehen sind, können beispielsweise Schiebersteuerventile in Einzel- oder Reihenanordnung, Hydromotoren, Arbeitszylinder, Sicherheitsventile, Mengenregelventile und ähnliche Hydraulikkomponenten sein, bei denen sich eine Schaltstellung ergibt, in der das Druckmittel schlagartig in den Ablauf abzuströmen beginnt. Bei Schiebersteuerventilen mit drucklosem Durchlauf besitzt beispielsweise der Kolbenschieber eine Durchgangsbohrung, die in den Steuerstellungen des Kolbenschiebers abgesperrt ist und in der neutralen Mittelstellung dem Druckmittel im drucklosem Durchlauf das Abströmen gestattet. Beim Umstellen von einer Steuerstellung auf die Neutralstellung muß das Druckmittel unter dem Arbeitsdruck schlagartig abströmen, wobei sich ein kräftiger Strahl bildet, der sich trotz Umlenkungen und Verengungen im wünschenswert widerstandsarmen Strömungsweg kaum zerstreut. Dies erfolgt in diesem Fall über zwei blendartige sich öffnende Durchgänge vom Gehäuse in den Kanal des Kolbenschiebers und vom Kanal des Kolbenschiebers wiederum in das Gehäuse und zum Reservoir. Ähnlich strömt in einem Sicherheitsventil das Druckmittel bei Überschreiten der eingestellten Druckgrenze schlagartig über das Ventilelement des Sicherheitsventils mit einem lauten Strahl ab. In beiden Fällen findet das Abströmen praktisch ohne Gegendruck statt. Bei höheren Fördermengen über 30 Liter/min. tritt ein deutliches und lautes Geschäusch auf. Eine Möglichkeit zur Geräuschdämpfung wäre ein dem abströmenden Strahl des Druckmittels entgegenwirkender Gegendruck, wie dies bei sogenannten Dekompressionsventilen (DE-A-2 542 666) zur Vermeidung von Druckschlägen und deren mechanischen Schäden üblich ist. Dieses Prinzip ist jedoch für die vorerwähnte Hydraulikvorrichtung nicht brauchbar, da es nach dem anfänglichen Druckabbau unbedingt erforderlich ist, daß das Druckmittel mit möglichst geringem Strömungswiderstand abströmt.

Es ist bereits vorgeschlagen worden (DE-A-3 308 575, Anmeldetag 10.3.83, Offenlegungstag 13.9.84), die Geräuschentwicklung bei Schiebersteuerventilen mit drucklosem Durchlauf dadurch zu verringern, daß die sich über den Schieber dieses Ventils bei dessen Bewegung bildenden, beiden Drosselstellen unterschiedlich groß sind, so daß in der ersten Drosselstelle ein höheres Druckgefälle auftritt, als in der zweiten Drosselstelle. Dies hat die Wirkung, daß von dem hohen Druck vor der ersten Drosselstelle in der ersten Drosselstelle ein größerer Anteil abgebaut wird, als in der zweiten Drosselstelle. Der dann dem Druckmittel vor der zweiten Drosselstelle entgegenwirkende Gegendruck dämpft die Geräuschentwicklung hinter der ersten Drosselstelle, während in der zweiten Drosselstelle dank der dort nur mehr geringen Druckdifferenz das Strömungsgeräusch bzw. Entspannungsgeräusch des Druckmittels leise ist, obwohl sich das Druckmittel praktisch ohne einen Gegendruck entspannen kann. Abgesehen davon, daß dadurch die Konstruktion des Schiebersteuerventils aufwendiger wird, bedarf es einer sorgfältigen Abstimmung der jeweils gewählten Konstruktion auf den Arbeitsdruckbereich und die Fördermenge. Trotzdem ist aber die erzielbare Geräuschdämpfung noch unbefriedigend, da die beiden Drosselstellen in strikter Abhängigkeit von der Bewegung des Kolbenschiebers gesteuert werden und druck- und fördermengenunabhängig arbeiten und einen Strahl erzeugen.

Der Erfindung liegt die Aufgabe zugrunde, eine Hydraulikvorrichtung der eingangs genannten Art zu schaffen, bei der das Strahlgeräusch beseitigt ist und das Abströmen des entspannten Druckmittels ohne nennenswerten Strömungswiderstand erfolgt.

Die gestellte Aufgabe wird erfindungsgemäß durch die im kennzeichnenden Teil des Patentanspruchs 1 angegebenen Merkmale gelöst.

Bei dieser Ausbildung kommt die Strahlstöreinrichtung tatsächlich nur dann zur Wirkung, wenn ein starker Strahl auftritt, und zwar in Abhängigkeit von dem Druck, der zur Strahlbildung führt. Es spielt dabei keine Rolle, wie die Stellbewegung des Gliedes oder über welchen Hub sie erfolgt, sonder die Strahlstöreinrichtung zerstört den Strahl unmittelbar beim Austritt aus dem Durchgang, so daß er sich nicht in den Abströmweg fortpflanzen und Geräusche erzeugen kann. Sobald der Druck vor dem Glied annähernd dem Druck hinter der Strahlstöreinrichtung entspricht und der Strahl entsprechend schwach ist, nimmt das Strahlstörelement wieder seine Bereitschaftsstellung ein, in der es das erforderliche ungedrosselte Abströmen des Druckmittels zuläßt, das z. B. bei einem Steuerschieber mit drucklosem Durchlauf unbedingt gebraucht wird. Eine konstruktive Abstimmung der Glieder der Hydraulikvorrichtung auf die Strahlstöreinrichtung ist nicht erforderlich, da diese nur auf den zu störenden Strahl abgestellt ist. Der zwischen der Druckquelle und dem Ablaufströmungsweg aus dem Glied entstehende Strahl wird vom Strahlstörelement wirkungsvoll zerstreut, wobei eine Geräuschentwicklung im Ablaufströmungsweg unterdrückt wird. Selbst in der Bereitschaftstellung in der die Abströmung nahezu ungedrosselt stattfindet, stört das Strahlstörelement die Fortpflanzung des schwachen Strahls.

Eine zweckmäßige Ausführungsform der Erfindung geht aus Anspruch 2 hervor. Sollte eine Strahlstöreinrichtung zum geräuschlosen Ablaufen des Druckmittels nicht ausreichen, z. B. weil die Fördermenge oder der Arbeitsdruck dazu zu hoch sind, ist hiner der Strahlstöreinrichtung wenigstens eine weitere Strahlstöreinrichtung angeordnet, die für eine weitere Störung der Strahlfortpflanzung sorgt. Jede weitere Strahlstöreinrichtung wird mit dem vor der vor ihr liegenden Strahlstöreinrichtung anstehenden Druck so vorgespannt, daß wiederum eine wirkungsvolle Strahlstörung erreicht wird, die für eine Geräuschdämpfung unabhängig vom tatsächlich vorliegenden Druck sorgt. Da auch die weitere Strahlstöreinrichtung dann in ihre Bereitschaftsstellung geht, wenn der Strahl abgeschwächt strömt, wird der Abströmung des Druckmittels kein nennenswerten Strömungswiderstand mehr entgegengesetzt.

Dabei ist es denkbar, daß der das Strahlstörelement jeder Strahlstöreinrichtung vorspannende Druck auch zentral nur vom über das vor dem Glied anstehenden Druck abgeleitet wird und dabei so geregelt wird, daß jede Strahlstöreinrichtung individuell die Strahlfortpflanzung stört.

Eine weitere, zweckmäßige Ausführungsform der Erfindung geht aus Anspruch 3 hervor. Die Stellkraft für das Strahlstörelement wird bei dieser Ausbildung in Abhängigkeit von dem abzubauenden Druck gesteuert, so daß bei einem höheren, abzubauenden Druck auch die Stellkraft anwächst, mit der das Strahlstörelement geräuschdämpfend den Strahl beeinflußt.

Eine weitere, baulich einfache und wirkungsvolle Ausführungsform der Erfindung geht aus Anspruch 4 hervor. Bei einem Differentialkolben reicht eine verhältnismäßig kleine Beaufschlagungsfläche aus, um eine sich in Abhängigkeit vom Druck verändernde Stellkraft zu erzeugen, die wiederum verantwortlich für den Gegendruck zur Strahlstörung ist. Die Strahlbrechfläche bricht den strömenden Druckmittelstrahl soweit, daß er sich nicht geräuschvoll fortpflanzen kann. Die störende Wirkung des Strahlstörelements kommt besonders gut bei der Ausführungsform gemäß Anspruch 5 zum Tragen, weil eine Verwirbelung erzwungen wird.

Alternativ ist auch eine Ausführungsform günstig, wie sie Anspruch 6 erläutert. Auch hier wird wiederum der abzubauende Druck abgegriffen und aus ihm die Stellkraft für das Strahlstörelemente erzeugt, jedoch nicht direkt auf hydraulischem Weg, sondern mechanisch oder elektromagnetisch. Dies könnte beispielsweise dann zweckmäßig sein, wenn aus baulichen Gründen keine hydraulische Verbindung zwischen dem Druckanschluß zu dem Glied und der nachgeschalteten Strahlstöreinrichtung möglich ist.

Wichtig ist auch das Merkmal von Anspruch 7, da diese schwache Feder dafür sorgt, daß das Strahlstörelement in der Bereitschaftsstellung verharrt, wenn die Hydraulikvorrichtung in Betrieb genommen wird.

Eine weitere, zweckmäßige Ausführungsform geht aus Anspruch 8 hervor. Bei dieser Ausbildung kann Druckmittel auch abströmen, wenn der Durchgang vom Strahlstörelement vollständig abgedeckt wird. Die störende Wirkung ist dann besonders stark. Die Beeinflussung des Strahls erfolgt abhängig von der Durchflußmenge.

Alternativ dazu ist auch eine Ausführungsform zweckmässig, wie sie aus Anspruch 9 hervorgeht. Bei dieser Ausbildung wird der Strahl unabhängig von der Durchflußmenge gebrochen, da die Störung des Strahls hier von der Vorspannung mit abhängt, die auf das Ventilelement durch die Feder aufgebracht wird.

Dabei ist auch das Merkmal von Anspruch 10 zweckmäßig, weil damit unzweckmäßige Schwingbewegungen des Ventilelementes unterdrückt werden.

Ein weiterer wichtiger Gesichtspunkt ist auch in Anspruch 11 enthalten. Durch diesen Flächenunterschied wird sichergestellt, daß nach der Entspannung des Druckmittels und bei abgeschwächtem Strahl der durch die Strömungsdynamik an der Strahlbrechfläche wirkende Kraftimpuls den Differentialkolben rasch in die Bereitschaftstellung überführt.

Eine besonders wirksame Geräuschdämpfung auch bei hohem Arbeitsdruck und großer Fördermenge läßt sich mit der Gesetzmäßigkeit gemäß Anspruch 12 erreichen.

Anspruch 13 hebt hervor, für welche hydraulischen Glieder derart vorspannbare Strahlstöreinrichtungen bevorzugt brauchbar sind.

Nachstehend werden anhand der Zeichnungen Ausführungsformen der Erfindung erläutert.

Es zeigen :

Figur 1   schematisch eine erste Ausführungsform einer Hydraulikvorrichtung,

Figur 2   schematisch eine zweite Ausführungsform einer Hydraulikvorrichtung,

Figur 3   schematisch eine dritte Ausführungsform einer Hydraulikvorrichtung,

Figur 4   schematisch eine vierte Ausführungsform einer Hydraulikvorrichtung,

Figur 5   ein Detail, teilweise im Schnitt, aus den vorhergehenden Ausführungsformen von Hydraulikvorrichtung, und

Figur 6   eine Detailvariante, im Schnitt.

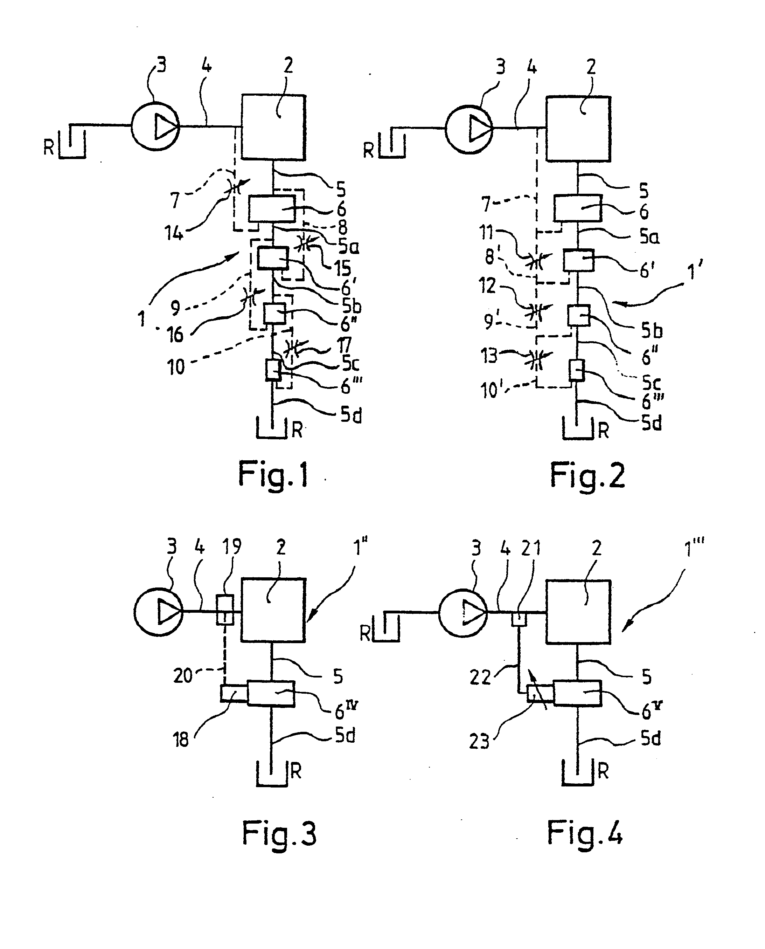

Bei einer Hydraulikvorrichtung 1 gemäß Fig. 1 wird ein Arbeits-, Steuer- oder Regelglied 2 von einer Pumpe 3 mit Druckmittel aus einem Reservoir R über eine Druckleitung 4 beaufschlagt. Das Glied 2 kann ein Schiebersteuerventil mit einem Kolbenschieber, ein Sicherheitsventil, ein Mengenregelventil oder dergleichen sein. Es können auch mehrere batterieartig zusammengefaßte Schiebersteuerventile, Sicherheitsventile oder dergleichen sein, die an eine gemeinsame Abströmleitung 5 angeschlossen sind, welche über Leitungszweige 5a, 5b, 5c und 5d mit einem Reservoir R verbunden ist, und zwar über darin in Reihe angeordnete Strahlstöreinrichtungen 6, 6', 6", 6'''. In der Abströmleitung 5 liegt gegenüber der Druckleitung 4 ein wesentlich niedriger oder gar kein Druck vor, wenn das Glied 2 ordnungsgemäß derart arbeitet, daß es die Verbindung zwischen den Leitungen 4 und 5 unterbricht und dafür die Druckbeaufschlagung aus der Leitung 4, z. B., anderen Verbrauchern zuführt, oder als Sicherheitsventil den Druck in der Druckleitung 4 überwacht.

Im Glied 2 oder vor dem Glied 2 zweigt aus der Druckleitung 4 eine Steuerleitung 7 ab, die an der der Abströmleitung 5 entgegengesetzten Seite in die erste Strahlstöreinrichtung 6 einmündet. Aus der Abströmleitung 5 zweigt vor der ersten Strahlstöreinrichtung 6 eine weitere Steuerleitung 8 ab, die an der dem Abströmleitungsabschnitt 5 abgewandten Seite der zweiten Strahlstöreinrichtung 6' an diese angeschlossen ist. Vom Abströmleitungsabschnitt 5a zweigt vor der zweiten Strahlstöreinrichtung 6' eine weitere Steuerleitung 9 ab, die an der dem Abströmleitungsabschnitt 5b abgewandten Seite an die dritte Strahlstöreinrichtung 6" angeschlossen ist. Vom Abströmleitungsabschnitt 5b zweigt vor der dritten Strahlstöreinrichtung 6" schließlich eine weitere Steuerleitung 10 ab, die an der dem Abströmleitungsabschnitt 5c abgewandten Seite an die vierte Strahlstöreinrichtung 6''' angeschlossen ist.

In den Steuerleitungen 7, 8, 9 und 10 können Drosseln 14, 15, 16 und 17, zweckmäßigerweise verstellbare Drosseln, angeordnet sein.

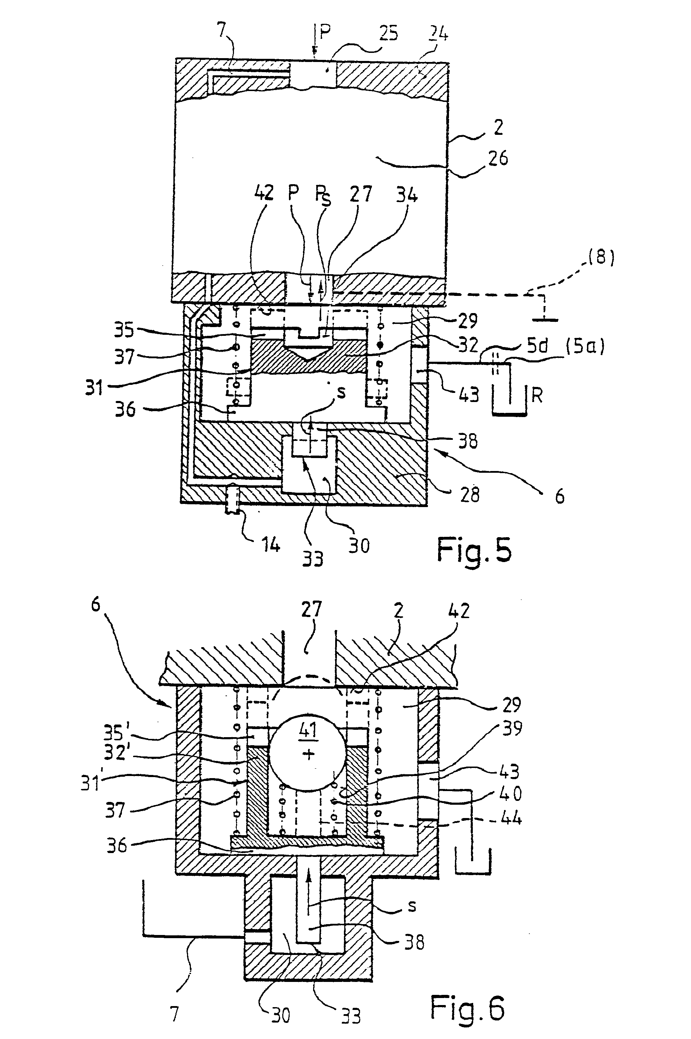

Aus den Fig. 5 und 6 sind im Detail Ausführungsformen der ersten Strahlstöreinrichtung 6 erkennbar. Die weiteren Strahlstöreinrichtungen 6', 6", 6''' entsprechen in ihrem Aufbau der Strahlstöreinrichtung 6, so daß es entbehrlich ist, sie im Detail zu erläutern.

Gemäß Fig. 5 weist das Glied 2 ein quaderförmiges Gehäuse 24 mit einem Druckleitungsanschluß 25 und einem Abströmleitungsdurchgang 27 auf, zwischen denen (nicht im Detail dargestellt) die aktiven Elemente 26 des Gliedes angeordnet sind, z. B. ein Kolbenschieber, ein Ventilelement mit Ansteuerung, ein Proportionalmagnet mit einer Zumeßeinrichtung, und dergleichen.

Im Bereich des Durchgangs 27 ist am Gehäuse 24 ein Sitz 42 ausgeformt, z. B. durch eine spezielle Bearbeitung. An dieser Seite des Gehäuses 24 ist ein weiteres Gehäuse 28 an der Strahlstöreinrichtung 6 angebracht. Das Gehäuse 28 enthält eine Kammer 29, sowie eine Vorsteuerkammer 30. Die Vorsteuerkammer 30 steht über die Steuerleitung 7 mit dem Druckleitungsanschluß 25 in Strömungsverbindung. Die Drossel 14 ist als Madenschraube dargestellt, mit der der Durchgang durch die Steuerleitung 7 veränderbar ist.

In der Kammer 29 ist ein Strahlstörelement 31 angeordnet, das als Differentialkolben ausgebildet ist. Die eine, in der Beaufschlagungsfläche größere Seite ist als Strahlbrechfläche 32 ausgebildet, während die andere Seite 33 an einem Kolben 38 angeordnet ist, der die Vorsteuerkammer 30 von der Kammer 29 abtrennt und die Vorsteuerkammer 30 begrenzt.

In der Strahlbrechfläche 32 ist an der dem Abströmdurchgang 27 zugewandten Seite eine Ausnehmung 34 vorgesehen, vor der radial nach außen verlaufen Kerben Ausnehmungen 35 bilden, deren Zweck später erläutert wird. An einer Schulter 36 des Elementes 31 stützt sich eine schwache Feder 37 ab, deren anderes Ende, z. B., am Gehäuse 24 anliegt. Die Feder 37 übt auf das Element 31 eine schwache Kraft aus, damit es in der gezeichneten Stellung verharrt, (Bereitschaftsstellung) in der eine im wesentlichen ungedrosselte Strömungsverbindung zwischen dem Durchgang 27 und einem Abströmanschluß 43 im Gehäuse 28 frei ist. Allerdings wirkt das Element in dieser Stellung ebenfalls strahlstörend, ohne einen nennenswerden Gegendruck zu erzeugen. An den Abströmanschluß 43 ist gemäß Fig. 5 der Abströmleitungsabschnitt 5d angeschlossen, der unmittelbar zum Reservoir R führt. Dies ist bei einer Hydraulikvorrichtung der Fall, bei der nur eine Strahlstöreinrichtung 6 alleine vorgesehen ist. Gemäß Fig. 1 ist jedoch an dem Abströmanschluß 43 und den Abströmleitungsabschnitt 5a die zweite Strahlstöreinrichtung 6' angeschlossen. Der Vorsteuerdruck für die zweite Strahlstöreinrichtung 6', die in Fig. 5 nicht gezeigt ist, wird dann beispielsweise über die vom Abströmleitungsanschluß 27 abzweigenden Vorsteuerleitung 8 abgegriffen.

Die Hydraulikvorrichtung gemäß den Fig. 1 und 5 (mit nur einer Strahlstöreinrichtung 6) arbeitet wie folgt :

Wenn vom Glied die Strömungsverbindung zwischen dem Druckleitungsanschluß 25 und dem Durchgang 27 unterbrochen ist, herrscht im Druckleitungsanschluß 25 ein hoher Druck. Dieser Druck wird über die Steuerleitung 7 auch in der Vorsteuerkammer 30 vorliegen, wo er über die Seite 33 das Element 31 aus der in vollen Linien gezeichneten Bereitschaftsstellung verschiebt, bis die Strahlbrechfläche 32 am Sitz 42 anliegt. Evtl. Lecköl kann trotzdem im wesentlichen ungehindert zum Ablaufleitungsabschnitt 5d abströmen, da die Ausnehmung 35 eine ständig offene Verbindung freihalten. Im Abströmleitungsanschluß 27 herrscht kein nennenswerten Druck, sondern der Druck des Reservoirs R.

Wenn nun das Glied 2 in eine Stellung gebracht wird, in der es die Strömungsverbindung zwischen dem Druckleitungsanschluß 25 und dem Durchgang 27 herstellt, muß der Druck P auf den Druck des Reservoirs abgebaut werden, d. h., das Druckmittel entspannt sich. Vom Druckleitungsanschluß 25 bildet sich über den Durchgang 27 ein starker Strahl, der das Element 31 in die gezeichnete Bereitschaftsstellung drängt. Dem wirkt jedoch eine Stellkraft S entgegen, die über den Druck in der Vorsteuerkammer 30 auf der Seite 33 des Elementes 31 erzeugt wird. Je höher der Druck ist, desto größer ist auch die Stellkrafts, so daß eine zunehmende Störwirkung erzeugt wird, aufgrund derer sich ein Gegendruck $P_s$

aufbaut. Der Strahl zerbricht und kann sich nicht frei vom Durchgang 27 in die Abströmleitung fortpflanzen und kann deshalb kein störendes Geräusch mehr erzeugen. Die Strahlbrechfläche 32 arbeitet mit dem Sitz 42 zusammen und bildet eine Art Drosselstelle mit Strahlstörwirkung.

Von Bedeutung ist dabei, daß der Gegendruck $P_S$ zum Druck P stets in Abhängigkeit von der Größe von P aufgebaut wird und demzufolge bei nachlassendem Druck P auch der Gegendruck $P_S$ nachläßt. Durch die Ausnehmungen 35 der Strahlbrechfläche 32 erfolgt eine mengengeregelte Abströmung des Druckmittels in Abhängigkeit von dem Verhältnis der Drücke P und $P_S$, wobei sich der Gegendruck $P_S$ nach der Größe der Seite 33 des Differentialkolbens, der das Arbeitselement 31 bildet, richtet. Der starke Strahl wird zerbrochen.

Sollten aus dem Strahl noch schwächere Einzelstrahlen entstehen, die immer noch zu einer Geräuschentwicklung führen, weil sie sich fortpflanzen, dann ist es zweckmäßig, wenigstens eine weitere Strahlstöreinrichtung 6' vorzusehen.

Wenn nun bei der Strahlzerstörung der Druckabbau soweit fortgeschritten ist, daß im Druckleitungsanschluß 25 annähernd der gleiche Druck herrscht, wie in der Kammer 29 bzw. im Abströmanschluß 43, dann ist die Stellkraft S so klein, daß die Strömungsdynamik aus dem Durchgang 27 ausreicht, das Strahlstörelement 31 wieder in die gezeichnete Bereitschaftsstellung zurückzubewegen, in der ein Einfluß auf den Strahl zwar noch vorhanden, der Abströmwiderstand aber vernachlässigbar klein ist. Dies ist besonders wichtig, z. B. bei Schiebersteuerventilen in den Stellung für drucklosen Durchlauf, da die Pumpe 3 das Druckmittel mit einem möglichst geringen Strömungswiderstand durch die gesamte Hydraulikvorrichtung in das Reservoir R pumpen soll, damit keine unnötige Energie vergeudet und das Druckmittel nicht erwärmt wird.

Das Strahlstörelement 31 könnte auch aus einer seitlichen Bereitschaftsstellung mit geringem Einfluß quer in den Weg des Strahls aus dem Durchgang 27 bewegt werden, um die angestrebte Wirkung zu erzeugen.

Bei der Ausführungsform der ersten Strahlstöreinrichtung 6 gemäß Fig. 6 erfolgt die Strahlstörung zwischen dem Durchgang 27 und dem Ablaufanschluß 43 druckabhängig, und nicht mengengeregelt, wie bei der Ausführung gemäß Fig. 5. Erreicht wird dies dadurch, daß das Element 31' in der Strahlbrechfläche 32' eine tiefe, topfförmige Ausnehmung 39 aufweist, in der ein durch eine kräftige Feder 40 belastetes Ventilelement 41 verschiebbar ist. Das Ventilelement 41 ist hier als Kugel ausgebildet, die durch die Feder 40 so weit aus der Ausnehmung 39 herausgeschoben werden kann, daß sie mit ihrem Umriß den Durchgang 27 verschließt, sobald das Element 31 durch die Stellkraft S mit der Strahlbrechfläche 32' am Sitz 42 anliegt. Der Strahl muß dann das Ventilelement 41 zunächst in die Ausnehmung 39 zurückdrücken, ehe das Druckmittel über die Ausnehmungen 35' abströmen kann. Im Strahlstörelement 31' kann eine Dämpfungseinrichtung 44 für das Ventilelement 41 vorgesehen sein. Bis der Druck im Abströmleitungsanschluß 27 das Ventil 41 vollständig in die Ausnehmung 39 zurückgedrückt hat, erfolgt die Strahlstörung in Abhängigkeit von der Kraft der Feder 40; erst danach strömt das Druckmittel auch mengengeregelt durch die Ausnehmungen 35' ab.

Sobald sich der Druck am Druckleitungsanschluß 25 soweit abgebaut hat, daß er dem Druck im Abströmanschluß 43 annähernd entspricht, wird durch die dynamische Kraft der Strömung das Element 31 in die gezeichnete Bereitschaftsstellung verschoben, so daß das Druckmittel relativ ungestört abströmt.

Auch die Strahlstöreinrichtung 6 gemäß Fig. 6 läßt sich mit weiteren Drosseleinrichtungen kombinieren, die entweder gleich oder gemäß Fig. 5 aufgebaut sein können.

Fig. 2 zeigt eine andere Ausführungsform einer Hydraulikvorrichtung 1', bei der die Ansteuerung der einzelnen Strahlstörelemente der Strahlstöreinrichtungen 6, 6', 6'', 6''' auf andere Weise erfolgt, als gemäß Fig. 1. Es wird dabei von der Vorsteuerleitung 7 unmittelbar die Steuerleitung 8' dann die Steuerleitung 9' und von dieser schließlich die Steuerleitung 10' beaufschlagt. In den Leitungen 8', 9' und 10' sind Drosseln 11, 12 und 13 vorzugsweise verstellbar, angeordnet. Ferner können (nicht dargestellt) einfache Ventileinrichtungen in die Steuerleitungen eingegliedert werden, damit die Vorsteuerdrücke für die Elemente der weiteren Strahlstöreinrichtungen in der anhand von Fig. 1 und 5 erläuterten Weise druckabhängig regelbar sind.

Bei der Ausführung von Fig. 3 ist dem Glied 2 nur eine einzige Strahlstöreinrichtung 6$^{IV}$ nachgeordnet. Es wäre aber auch denkbar, daß mehrere derartige Strahlstöreinrichtungen hintereinander geschaltet sind. Die Strahlstöreinrichtung 6$^{IV}$ besitzt einen mechanischen Stellantrieb 18, der über eine Übertragungsverbindung 20 mit einem Druckabnehmer 19 verbunden ist. Denkbar wäre dabei, daß über eine Hebelverbindung vom Druckabnehmer 19 über die Übertragung 20 eine jeweils vom Druck in der Druckleitung 4 abhängige Stellkraft auf den mechanischen Stellantrieb übertragen wird, der dann nach Maßgabe des Drucks in der Druckleitung 4 das Strahlstörelement in der vorerwähnten Weise bewegt.

Gemäß Fig. 4 ist wiederum nur eine einzige Strahlstöreinrichtung 6$^V$ dem Glied 2 nachgeschaltet, wobei in dieser Hydraulikvorrichtung 1''' in der Druckleitung 4 ein Druckwandler 21 angeordnet ist, der den Druck in der Druckleitung 4 in ein elektrisches Signal umwandelt, und über eine Leitung 22 einem Stellmagneten 23, vorzugsweise einem Proportionalmagneten, zuführt, der mit der Strahlstöreinrichtung 6$^V$ baulich verbunden ist. Auf dieser Weise wird ein vom Druck in der Druckleitung 4 abhängiges, elektrisches Signal dazu verwendet, die Stellkraft für das Strahlstörelement der Strahlstöreinrichtung 6$^V$ zu verändern und das Strahlstörelement so zu bewegen, wie dies anhand der Fig. 1, 5 und 6 erläutert wurde.

Es liegt auf der Hand, daß der Strahlstöreinrichtung 6[V] auch weitere Strahlstöreinrichtungen nachgeschaltet sein können, wenn der abzubauende Druck insgesamt so hoch ist, bzw. die Fördermenge so groß ist, daß mit der Strahlstöreinrichtung 6[V] allein die Geräuschentwicklung des Strahls nicht zufriedenstellend unterdrückt wird.

Der Drosseleffekt in jeder Strahlstöreinrichtung ist von sekundärer Bedeutung, da es primär darauf ankommt, den sich bildenden Strahl von vornherein an der geräuschvollen Fortpflanzung in den Abströmweg zu hindern, was wirkungsvoll mit dem körperlich in den Strahl eingreifenden Strahlstörelement erreicht wird. Allerdings muß das Strahlstörelement dann seine Wirkung beenden oder zumindest weitgehend vermindern, wenn aufgrund des ohnehin in Bezug auf sein Geräusch unkritischen Strahls ein ungestörtes Abströmen gebraucht wird.

**Patentansprüche**

1. Hydraulikvorrichtung (1, 1') mit wenigstens einem verstellbaren Arbeits-Steuer- oder Regelglied (2), das zwischen einer Hochdruckquelle (3) und einem Abströmweg (5, R) angeordnet und in wenigstens eine Stellung bewegbar ist, in der über einen Durchgang (27) zum Abströmweg ein Strahl gebildet wird, dadurch gekennzeichnet, daß am Austritt des Durchgangs (27) in den Abströmweg (5, R) wenigstens eine Strahlstöreinrichtung (6, 6', 6", 6''') mit einem im Strahl liegenden Strahlstörelement (31, 31') angeordnet ist, das aus einer Bereitschaftsstellung entgegengesetzt zur oder in die Strahlrichtung hinein bewegbar ist, daß das Strahlstörelement (31, 31') gegen den Strahl durch eine vom Druck vor dem Glied (2) abhängige Stellkraft (S) beaufschlagbar ist, und daß das Strahlstörelement (31, 31') selbsttätig seine Bereitschaftsstellung einnimmt, wenn der Druck vor dem Glied (2) annähernd dem Druck im Abströmweg (5, R) entspricht.

2. Hydraulikvorrichtung nach Anspruch 1, dadurch gekennzeichnet, daß im Abströmweg (R) hinter der Strahlstöreinrichtung (6) wenigstens eine weitere gleichartige Strahlstöreinrichtung (6', 6", 6''') angeordnet ist, deren Strahlstörelement (31, 31') in Abhängigkeit vom Druck vor der vorhergehenden Strahlstöreinrichtung (6, 6', 6") aus seiner Bereitschaftsstellung verstellbar ist.

3. Hydraulikvorrichtung nach den Ansprüchen 1 und 2, dadurch gekennzeichnet, daß die Strahlstöreinrichtung (6, 6', 6", 6''') eine in einer Abströmleitung (5, 5a, 5b, 5c, 5d) liegende Kammer (29) aufweist, in der im Bereich des Austritts des Durchgangs (27) ein Sitz (42) vorgesehen ist, und daß in der Kammer (29) das Strahlstörelement (31, 31') durch die in Abhängigkeit vom Druck vor dem Glied (2) bzw. bei mehreren Strahlstöreinrichtungen in Abhängigkeit von dem Druck vor dem Strahlstörelement der jeweils vorhergehenden Strahlstöreinrichtung (6, 6', 6") veränderbare Stellkraft (S) unter Verengung des Abströmweges für den Strahl bis zur Anlage am Sitz (42) beaufschlagbar ist.

4. Hydraulikvorrichtung nach den Ansprüchen 1 bis 3, dadurch gekennzeichnet, daß das Strahlstörelement (31, 31') ein doppelseitig wirkender Differentialkolben ist, dessen eine Seite als mit dem Sitz (42) zusammenarbeitende im wesentlichen quer zur Strahlrichtung liegende Strahlbrechfläche (32, 32') ausgebildet ist und dessen andere und entgegengesetzt liegende Seite (33) eine Vorsteuerkammer (30) begrenzt, die mit einem vom Druck (P) vor dem Glied (2) bzw. bei mehreren Strahlstöreinrichtungen (6, 6', 6", 6''') vom Druck vor dem Strahlstörelement (31, 31') der jeweils vorhergehenden Strahlstöreinrichtung (6, 6', 6") abgeleiteten Vorsteuerdruck beaufschlagt ist.

5. Hydraulikvorrichtung nach Anspruch 4, dadurch gekenzeichnet, daß die Strahlbrechfläche (32, 32') uneben, vorzugsweise mit einer zentralen Vertiefung (34) oder Erhöhung (41), ausgebildet ist.

6. Hydraulikvorrichtung nach den Ansprüchen 1 und 2, dadurch gekennzeichnet, daß das Strahlstörelement mit einer mechanischen oder elektromagnetischen Stelleinrichtung (18, 23) in Arbeitsverbindung steht, mit der die Stellkraft (S) für das Strahlstörelement erzeugbar ist.

7. Hydraulikvorrichtung nach den Ansprüchen 1 bis 6, dadurch gekennzeichnet, daß das Strahlstörelement (31, 31') durch eine schwache Feder (37) in Richtung auf seine Bereitschaftsstellung zu belastet ist.

8. Hydraulikvorrichtung nach wenigstens einem der Ansprüche 1 bis 7, dadurch gekennzeichnet, daß in der Strahlbrechfläche (32, 32') des Strahlstörelements (31, 31') quer zur Strahlrichtung offene Ausnehmungen (35, 35') vorgesehen sind die bei Anlage des Strahlstörelements am Sitz (42) einen vorbestimmten Durchgangsquerschnitt für den Abströmweg offenhalten.

9. Hydraulikvorrichtung nach wenigstens einem der Ansprüche 1 bis 8, dadurch gekennzeichnet, daß in der Strahlbrechfläche (32') des Strahlstörelements (31') ein Ventilelement (41) gegen die Kraft einer im Strahlstörelement angeordneten, vorzugsweise verstellbaren, Feder (40) bewegbar geführt ist, das zumindest in der Endstellung des Strahlstörelementes gegen den Sitz (42) andrückbar ist.

10. Hydraulikvorrichtung nach Anspruch 9, dadurch gekennzeichnet, daß im Strahlstörelement (31') eine Dämpfungseinrichtung (44) für das Ventilelement (41) angeordnet ist.

11. Hydraulikvorrichtung nach wenigstens einem der Ansprüche 1 bis 10, dadurch gekennzeichnet, daß die Vorsteuerkammer (30) begrenzende Seite (33) des Differentialkolbens erheblich kleiner ist, als die in der Kammer (29) dem Strahl ausgesetzte Strahlbrechfläche (32, 32').

12. Hydraulikvorrichtung nach wenigstens einem der Ansprüche 1 bis 11, dadurch gekennzeichnet, daß die Stellkräfte für die Strahlstörelemente der Strahlstöreinrichtungen zueinander in einem durch die Quadratwurzel aus dem jeweiligen, abzubauenden Druck bestimmten Verhältnis stehen.

13. Hydraulikvorrichtung nach den vorhergehenden Ansprüchen, dadurch gekennzeichnet, daß die Strahlstöreinrichtung(en) (6, 6', 6", 6''') einem oder mehreren Schiebersteuerventilen mit drucklosem Durchlauf, einem Sicherheitsventil oder einem Mengenregelventil nachgeschaltet ist (sind).

**Claims**

1. A hydraulic apparatus (1, 1') comprising at least one adjustable operating, control or regulating member (2) disposed between a high pressure source (3) downstream flow path (5, R) and adapted to be moved to at least one position in which a jet is formed *via* a passage (27) towards said downstream flow path, characterized in that at the exit of said passage (27) into said downstream flow path (5, R) there is provided at least one jet spoiler device (6, 6', 6", 6''') having a jet spoiler element (31, 31') located in said jet and adapted to be moved from a stand-by position opposite to or into the direction of said jet, that said jet spoiler element (31, 31') is adapted to be subjected against said jet to an adjusting force (S) depending on the pressure upstream of said member (2), and that said jet spoiler element (31, 31') automatically assumes its stand-by position when the pressure upstream of said member (2) approximately corresponds to the pressure in said downstream flow path (5, R).

2. A hydraulic apparatus according to claim 1, characterized in that in said downstream flow path (R) downstream of said jet spoiler device (6) there is provided at least one further similar jet spoiler device (6', 6", 6''') the jet spoiler element (31, 31') of which is adapted to be adjusted from its stand-by position in response to the pressure upstream of the preceding jet spoiler device (6, 6', 6").

3. A hydraulic apparatus according to claims 1 and 2, characterized in that said jet spoiler device (6, 6', 6", 6''') comprises a chamber (29) disposed in said downstream flow path (5, 5a, 5b, 5c, 5d) provided with a seat (42) adjacent the exit of said passage (27), and that within said chamber (29) said jet spoiler element (31, 31') is adapted to be actuated by said adjusting force (S) varying in response to the pressure upstream of said member (2) or, in the case of a plurality of jet spoiler devices, in response to the pressure upstream of the respective preceding jet spoiler device (6, 6', 6") for restricting the downstream flow path for said jet up to engagement with said seat (42).

4. A hydraulic apparatus according to claims 1 to 3, characterized in that said jet spoiler element (31, 31') is a double-acting differential piston one side of which is formed as a jet breaker surface (32, 32') cooperating with said seat (42) and extending substantially transversely of the direction of said jet, while its other oppositely facing side (33) closes a pre-control chamber (30) supplied with a pre-control pressure derived from the pressure (P) upstream of said member (2) or, in the case of a plurality of jet spoiler devices (6, 6', 6", 6'''), from the pressure upstream of the jet spoiler element (31, 31') of the respective preceding jet spoiler device (6, 6', 6").

5. A hydraulic apparatus according to claim 4, characterized in that said jet breaker surface (32, 32') is uneven and preferably formed with a central recess (34) or elevation (41).

6. A hydraulic apparatus according to claims 1 and 2, characterized in that said jet spoiler element is operatively connected to a mechanic or electromagnetic adjustment device (18, 23) operable to generate said adjusting force (S) for said jet spoiler element.

7. A hydraulic apparatus according to claims 1 to 6, characterized in that said jet spoiler element (31, 31') is biased towards its stand-by position by a weak spring (37).

8. A hydraulic apparatus according to at least one of claims 1 to 7, characterized in that in said jet breaker surface (32, 32') of said jet spoiler element (31, 31') there are provided recesses (35, 35') opening transversely of the jet direction for maintaining a predetermined cross-sectional through-flow area for said downstream flow passage when said jet spoiler element is engaged with said seat (42).

9. A hydraulic apparatus according to at least one of claims 1 to 8, characterized in that in said jet breaker surface (32') of said jet spoiler element (31') there is movably guided a valve element (41) against the force of a preferably adjustable spring (40) disposed in said jet spoiler element, said valve element being adapted to be pressed into engagement with said seat (42) at least in the end position of said jet spoiler element.

10. A hydraulic apparatus according to claim 9, characterized in that within said jet spoiler element (31') there is provided a dampening means (44) for said valve element (41).

11. A hydraulic apparatus according to at least one of claims 1 to 10, characterized in that the side (33) of said differential piston closing said pre-control chamber (30) is considerably smaller that the jet breaker surface (32, 32') exposed to said jet in said chamber (29).

12. A hydraulic apparatus according to at least one of claims 1 to 11, characterized in that the adjusting forces for the jet spoiler elements of the jet spoiler devices are in a relationship to one another determined by the square root of the actual pressure to be relieved.

13. A hydraulic apparatus according to the preceding claims, characterized in that said jet spoiler device(s) (6, 6', 6", 6''') is (are) connected downstream of one or a plurality of zero-pressure flow-through control slide valve(s), a safety valve, or a flow regulating valve.

**Revendications**

1. Dispositif hydraulique (1, 1') comportant au moins un organe de travail, de commande ou de réglage (2) réglable, qui est disposé entre une source de haute pression (3) et un trajet d'écoulement (5, R) et peut être déplacé dans au moins une position dans laquelle un jet se forme par l'intermédiaire d'un passage (27) en direction du trajet d'écoulement, caractérisé en ce qu'à la sortie du passage (27) est disposé dans le trajet d'écoulement (5, R) au moins un dispositif de perturbation de jet (6, 6', 6", 6''') comportant un élément de perturbation de jet (31, 31') situé dans le jet, lequel peut être déplacé à partir d'une position d'attente en sens inverse ou dans le sens du jet, que l'élément de perturbation de jet (31, 31') peut être soumis, contre le jet, à une force de réglage (S) dépendant de la pression en amont de l'organe (2), et que l'élément de perturbation de jet (31, 31') reprend automatiquement sa position d'attente lorsque la pression en amont de l'organe (2) correspond approximativement à la pression dans le trajet d'écoulement (5, R).

2. Dispositif hydraulique selon la revendication 1, caractérisé en ce qu'on dispose dans le trajet d'écoulement (R) en aval du dispositif de perturbation de jet (6) au moins un autre dispositif de perturbation de jet de même type (6', 6", 6''') dont l'élément de perturbation de jet (31, 31') peut être déplacé hors de sa position d'attente en fonction de la pression en amont du dispositif de perturbation de jet précédent (6, 6', 6").

3. Dispositif hydraulique selon les revendications 1 et 2, caractérisé en ce que le dispositif de perturbation de jet (6, 6', 6", 6''') comporte une chambre (29) située dans une canalisation d'écoulement (5, 5a, 5b, 5c, 5d), dans laquelle on prévoit un siège (42) dans la zone de la sortie du passage (27), et que dans la chambre (29) l'élément de perturbation de jet (31, 31') est soumis à une force de réglage (S) pouvant varier en fonction de la pression en amont de l'organe (2), ou dans le cas de plusieurs dispositifs de perturbation de jet, en fonction de la pression en amont du dispositif de perturbation de jet précédent (6, 6', 6") en rétrécissant le trajet d'écoulement du jet jusqu'à l'application de l'élément sur le siège (42).

4. Dispositif hydraulique selon les revendications 1 à 3, caractérisé en ce que l'élément de perturbation de jet (31, 31') est un piston différentiel à double effet, dont un côté est réalisé sous forme de surface de rupture de jet (32, 32') située sensiblement transversalement au sens du jet et coopérant avec le siège (42), et dont l'autre côté opposé (33) délimite une chambre de commande pilote qui est soumise à une pression pilote dérivée de la pression (P) en amont de l'organe (2), ou dans le cas de plusieurs dispositifs de perturbation de jet (6, 6', 6", 6''') de la pression en amont de l'élément de perturbation de jet (31, 31') du dispositif de perturbation de jet précédent (6, 6', 6").

5. Dispositif hydraulique selon la revendication 4, caractérisé en ce que la surface de rupture de jet (32, 32') n'est pas plane, et est réalisée de préférence avec une cavité (34) ou une surélévation (41) centrale.

6. Dispositif hydraulique selon les revendications 1 et 2, caractérisé en ce que l'élément de perturbation de jet est en relation fonctionnelle avec un dispositif de réglage (18, 23) mécanique ou électromagnétique, avec lequel peut être produite la force de réglage (S) pour l'élément de perturbation de jet.

7. Dispositif hydraulique selon les revendications 1 à 6, caractérisé en ce que l'élément de perturbation de jet (31, 31') est assujetti à un ressort faible (37) en direction de sa position d'attente.

8. Dispositif hydraulique selon l'une au moins des revendications 1 à 7, caractérisé en ce qu'on prévoit dans la surface de rupture de jet (32, 32') de l'élément de perturbation de jet (31, 31') des évidements (35, 35') ouverts transversalement au sens du jet, qui, lorsque l'élément de perturbation de jet appuie sur le siège (42), maintiennent ouverte une section de passage prédéterminée pour le trajet d'écoulement.

9. Dispositif hydraulique selon l'une au moins des revendications 1 à 8, caractérisé en ce que dans la surface de rupture de jet (32') de l'élément de perturbation de jet (31') se déplace, en étant guidé, un élément de soupape (41) contre la force d'un ressort (40), de préférence réglable, disposé dans l'élément de perturbation de jet, lequel élément de soupape peut être appliqué contre le siège (42) au moins dans la position terminale de l'élément de perturbation de jet.

10. Dispositif hydraulique selon la revendication 9, caractérisé en ce qu'on dispose dans l'élément de perturbation de jet (31') un dispositif amortisseur (44) pour l'élément de soupape (41).

11. Dispositif hydraulique selon l'une au moins des revendications 1 à 10, caractérisé en ce que le côté (33) du piston différentiel délimitant la chambre de commande pilote (30) est notablement plus petit que la surface de rupture de jet (32, 32') exposée au jet dans la chambre (29).

12. Dispositif hydraulique selon l'une au moins des revendications 1 à 11, caractérisé en ce que les forces de réglage pour les éléments de perturbation de jet des dispositifs de perturbation de jet sont entre elles dans un rapport déterminé par la racine carrée de la pression respective à réduire.

13. Dispositif hydraulique selon les revendications précédentes, caractérisé en ce que le(s) dispositif(s) de perturbation de jet (6, 6', 6", 6''') est (sont) monté(s) à la suite d'un ou de plusieurs distributeurs de commande à tiroir à passage sans pression, d'une soupape de sécurité ou d'une soupape de régulation de débit.

Fig.1

Fig.2

Fig.3

Fig.4

Fig. 5

Fig. 6